# EUROPÄISCHE PATENTANMELDUNG

(11) **EP 4 518 147 A1**
(43) Veröffentlichungstag der Anmeldung: **05.03.2025**
(21) Anmeldenummer: 23194897.7
(22) Anmeldetag: 01.09.2023
(51) Int. Cl.: H02S 20/20, H02S 20/23

(54) **TERRASSENDACH MIT SCHRÄG ANGESTELLTEN PHOTOVOLTAIKMODULEN**

(71) Anmelder: weinor GmbH & Co. KG, 50829 Köln (DE)
(72) Erfinder: Stawski, Karl-Heinz, 50769 Köln (DE)
(74) Vertreter: Patentanwaltskanzlei Methling

(57) **Zusammenfassung**

Die Erfindung betrifft eine Überdachung (1) mit einem aus zumindest einem vorderen Querträger (21) und einem hinteren Querträger und zumindest zwei Längsträgern (22) gebildeten Rahmen, wobei der Rahmen mehrere Photovoltaikmodule (31, 32, 33, 34) trägt, die sich parallel zu den Querträgern (21) erstrecken und entlang der Längsträger (22) vom vorderen Querträger (21) zum hinteren Querträger hintereinander angeordnet sind, wobei die Photovoltaikmodule (31, 32, 33, 34) gegenüber der Horizontalen unter einem Winkel schräg angestellt und jeweils im Verlauf entlang der Längsträger (22) vom vorderen Querträger (21) in Richtung auf den hinteren Querträger ansteigen, wobei die geodätisch niedriger liegende vordere Kante eines jeden schräg angestellten Photovoltaikmoduls (31, 32, 33, 34) in einen parallel zu dieser vorderen Kante verlaufenden Regensammler (41, 42, 43, 44) mündet.

## Beschreibung

Die Erfindung betrifft eine Überdachung mit einem aus zumindest einem vorderen Querträger und einem hinteren Querträger und zumindest zwei Längsträgern gebildeten Rahmen, wobei der Rahmen mehrere Photovoltaikmodule trägt, die sich parallel zu den Querträgern erstrecken und entlang der Längsträger vom vorderen Querträger zum hinteren Querträger hintereinander angeordnet sind, wobei die Photovoltaikmodule gegenüber der Horizontalen unter einem Winkel schräg angestellt und jeweils im Verlauf entlang der Längsträger vom vorderen Querträger in Richtung auf den hinteren Querträger ansteigen.

Derartige Überdachungen sind bekannt. Um den Ertrag eines Photovoltaikmodules zu steigern ist es üblich, das Photovoltaikmodul unter einem Winkel schräg anzustellen, um einen möglichst senkrechten Einfall der Sonnenstrahlen zu ermöglichen. Problematisch bei den bekannten Überdachungen mit einer Mehrzahl von Photovoltaikmodulen, die entsprechend schräg angestellt sind, ist die Sammlung und Ableitung des von den Photovoltaikmodulen ablaufenden Regenwassers.

Die Aufgabe der Erfindung ist es, diese Nachteile der bekannten Überdachungen zu überwinden.

Diese Aufgabe wird erfindungsgemäß durch eine Überdachung gemäß Anspruch 1 gelöst. Vorteilhafte Weiterbildungen der Erfindung sind in den Unteransprüchen angegeben.

Besonders vorteilhaft bei der Überdachung mit einem aus zumindest einem vorderen Querträger und einem hinteren Querträger und zumindest zwei Längsträgern gebildeten Rahmen, wobei der Rahmen mehrere Photovoltaikmodule trägt, die sich parallel zu den Querträgern erstrecken und entlang der Längsträger vom vorderen Querträger zum hinteren Querträger hintereinander angeordnet sind, wobei die Photovoltaikmodule gegenüber der Horizontalen unter einem Winkel schräg angestellt und jeweils im Verlauf entlang der Längsträger vom vorderen Querträger in Richtung auf den hinteren Querträger ansteigen, ist es, dass die geodätisch niedriger liegende vordere Kante eines jeden schräg angestellten Photovoltaikmoduls in einen parallel zu dieser vorderen Kante verlaufenden Regensammler mündet.

Es sind somit mehrere parallel zum vorderen Querträger Photovoltaikmodule kaskadenartig hintereinander angeordnet, wobei die Photovoltaikmodule schräg angestellt sind, um einen möglichst senkrechten Lichteinfall des Sonnenlichts zu ermöglichen, wodurch der Ertrag der Photovoltaikmodule gesteigert wird. An der geodätisch tiefer liegenden Kante münden die Photovoltaikmodule jeweils in einen Regensammler, der der Aufnahme des von dem jeweiligen Photovoltaikmodul ablaufenden Regenwassers dient. Entlang der Querträger sind somit jeweils ein Regensammler und ein Photovoltaikmodul alternierend angeordnet.

Von oben aus auf die Überdachung gesehen sind somit mehrere Photovoltaikmodule hintereinander angeordnet, wobei zwischen zwei benachbarten Photovoltaikmodulen jeweils ein streifenförmiger Regensammler angeordnet ist, der das von dem nachfolgend angeordneten, schräg angestellten Photovoltaikmodul ablaufende Regenwasser aufnimmt und ableitet.

Die Regensammler können aus Glas oder Metall oder Kunststoff oder einem Materialverbund gebildet sein. Bei Verwendung eines transparenten Materials wie beispielsweise Glas oder eines transparenten Kunststoffes kann Licht durch die streifenförmigen Regensammler in den Raum unter der Überdachung einfallen.

Jedes Photovoltaikmodul kann einstückig ausgebildet sein und in seiner Erstreckung über der Breite der Überdachung parallel zu den Querträgern beispielsweise dem Abstand der beiden Längsträger entsprechen. Alternativ kann jedes Photovoltaikmodul durch mehrere Teilmodule gebildet sein. Hierdurch können auch größere Dachflächen mit Photovoltaikmodulen ausgerüstet werden.

Einer oder mehrere der Querträger oder Längsträger kann durch ein Wandanschlussprofil gebildet sein oder ein Wandanschlussprofil aufweisen, mittels dessen eine Wandmontage der Überdachung an einer Gebäudewand möglich ist.

Die Überdachung kann somit an einer Hauswand oder in einer Ecke oder Nische eines Gebäudes mit entsprechenden Wandanschlussprofilen und/oder Querträgern und/oder Längsträgern montiert sein. Alternativ kann die Überdachung freistehend angeordnet sein. Der Rahmen kann von insbesondere senkrechten Stützpfosten getragen werden.

Vorzugsweise wird der Rahmen von mehreren Stützpfosten getragen, insbesondere können die Stützpfosten integrierte Kabelkanäle zur Aufnahme von Anschlusskabeln der Photovoltaikmodule und/oder zumindest eine Steckdose aufweisen, insbesondere zumindest eine Gleichspannungssteckdose mit einer Betriebsspannung von 12 V oder von 24 V und/oder zumindest eine Wechselspannungssteckdose mit einer Betriebsspannung von bis zu 230 V

Durch eine Integration einer oder mehrerer Gleichspannungssteckdosen und/oder Wechselspannungssteckdosen kann ein unmittelbarer Anschluss von Verbrauchern an der Überdachung erfolgen, wie beispielsweise von Ladegeräten und/oder mobiler Mobilfunkendgeräten, Radios, Lampen und dergleichen. Vorzugsweise weisen die Regensammler zur Ableitung von Regenwasser ein Gefälle in Richtung auf einen der Längsträger oder ausgehend von der Mitte in Richtung auf beide Längsträger auf. Durch ein solches integriertes Gefälle wird die Ableitung des im Regensammler gesammelten Regenwassers in Richtung auf einen oder beide Längsträger erleichtert.

Bevorzugt weist zumindest einer der Längsträger einen integrierten Regenwasserkanal zur Sammlung und Ableitung von Regenwasser aus den Regensammlern zu einem oder mehreren Fallrohren auf. Insbesondere kann der Rahmen von insbesondere senkrechten Stützen getragen werden. In einer oder mehreren Stützen kann ein Fallrohr zur Ableitung von Regenwasser angeordnet sein.

In einer bevorzugten Ausführungsform ist die Erstreckung der Regensammler senkrecht zum Verlauf des vorderen Querträgers so groß ist, dass ein schräg angestelltes Photovoltaikmodul bei senkrecht auf das Photovoltaikmodul auftreffendem Sonnenlicht keinen Schatten auf das vom vorderen Querträger aus betrachtet dahinter angeordnete Photovoltaikmodul wirft. Durch eine derartige geometrische Ausgestaltung der Anordnung von Photovoltaikmodul, dem folgenden Regensammler und nachfolgendem Photovoltaikmodul wird der Ertrag der Photovoltaikmodule gesteigert, indem ein Schattenwurf von einem Photovoltaikmodul auf das dahinter angeordnete Photovoltaikmodul vermieden wird. Mit dem Ertrag ist dabei die Ausbeute der Stromerzeugung mittels der Photovoltaikmodule bezeichnet, also die tatsächlich erreichte Leistung der Photovoltaikmodule.

Vorzugsweise ist der stufenförmige Übergang von der hinteren, geodätisch höher gelegenen Kante eines Photovoltaikmoduls zu dem vom vorderen Querträger aus betrachtet dahinter liegenden Regensammler auf dem geodätisch niedriger liegenden Niveau mittels einer Lamelle verschlossen, um eine regenwasserdichte Dachfläche zu schaffen.

Bei der Überdachung sind wie erläutert mehrere Photovoltaikmodule hintereinander im Verlauf der Richtung senkrecht zum vorderen Querträger angeordnet, wobei die Photovoltaikmodule jeweils unter einem Winkel gegenüber der Horizontalen vom vorderen Querträger aus betrachtet schräg ansteigend angestellt sind. Dabei sind Photovoltaikmodule und Regensammler wie erläutert alternierend angeordnet. Um eine regendichte Dachfläche zu schaffen, sind die stufenförmigen Übergänge von der hinteren Kante der Photovoltaikmodule zu dem nachfolgend angeordneten Regensammler jeweils mittels einer Lamelle verschlossen. Die Begriffe vorne und hinten beziehen sich jeweils auf die Blickrichtung ausgehend vom vorderen Querträger zum hinteren Querträger.

Dabei können die Lamellen vollständig oder teilweise durch ein lichtdurchlässiges oder ein opakes Material gebildet sein. Hierdurch wird ein Lichteinfall in den Raum unter der Überdachung ermöglicht oder alternativ eine geschlossene Beschattung des Raumes unter der Überdachung ermöglicht. Besonders vorteilhaft ist eine Verwendung von transparentem Material wie beispielsweise Glas oder transparenter Kunststoff für die Lamellen, da in diesem Fall ein Lichteinfall in den Raum unter der Überdachung möglich ist, da die Photovoltaikmodule große Bereiche der Dachfläche abschatten.

Vorzugsweise ist zumindest eine Lamelle durch eine bewegbare Lamelle gebildet, die von einer Schließstellung in eine Öffnungsstellung bewegbar ist. Besonders bevorzugt sind alle Lamellen durch bewegbare Lamellen gebildet, die von einer Schließstellung in eine Öffnungsstellung bewegbar sind.

Vorzugsweise ist/sind die Lamelle/Lamellen um eine Achse drehbar gelagert und von einer senkrechten oder annähernd senkrechten Schließstellung, in welcher der stufenförmige Übergang von der hinteren, geodätisch höher gelegenen Kante eines Photovoltaikmoduls zum dahinter angeordneten Regensammler regendicht verschlossen ist, durch eine Drehung in eine Öffnungsstellung überführbar ist, in welcher die Lamelle/Lamellen waagerecht oder annähernd waagerecht liegt/liegen und den stufenförmigen Übergang von der hinteren, geodätisch höher gelegenen Kante eines Photovoltaikmoduls zum dahinter angeordneten Regensammler als Lüftungsöffnung freigibt.

In der waagerechten Lage können die Lamellen insbesondere auf den Längsträgern aufliegen. Durch die Möglichkeit der Verstellung der Lamellen und der Freigabe von Lüftungsöffnungen kann der Raum unter der Überdachung belüftet werden, um einer Stauhitze entgegen zu wirken. Ein weiterer Vorteil liegt darin, dass Photovoltaikmodule bei ansteigenden Temperaturen eine abnehmende Leistung aufweisen. Durch den Kühleffekt durch das Öffnen der Lamellen als Lüftungsöffnungen kann somit die Leistung der Photovoltaikmodule und damit der Ertrag der Stromerzeugung mittels der Photovoltaikmodule gesteigert werden.

Insbesondere in dem Fall, wenn die Überdachung durch Unterbauelemente wie beispielsweise Glaswände, Glasschiebewände oder dergleichen zu einem Wintergarten ausgebaut ist, kann sich bei starker Sonneneinstrahlung der Raum unter der Überdachung erhitzen. Durch die Anordnung der öffenbaren Lüftungsöffnungen in Form der beweglichen Lamellen kann somit eine Belüftung des Raumes unter der Überdachung erfolgen und Stauhitze entweichen. Hierdurch wird sowohl die Aufenthaltsqualität unter der Überdachung als auch der Ertrag der Photovoltaikmodule durch eine Kühlung der Photovoltaikmodule gesteigert.

Bevorzugt sind mehrere Lamellen, die jeweils am Übergang von der hinteren, geodätisch höher gelegenen Kante eines Photovoltaikmoduls zum dahinter angeordneten Regensammler angeordnet sind, kinematisch gekoppelt und synchron verstellbar.

Eine kinematische Kopplung einer Mehrzahl verstellbarer Lamellen kann durch eine oder mehrere Kopplungsstangen und/oder Seilzüge und/oder Riemen, insbesondere Zahnriemen, erfolgen, wobei ein auf das Kopplungsmittel einwirkender Antrieb eine synchrone Verstellung aller kinematisch gekoppelter Lamellen bewirkt und somit alle Lüftungsöffnungen synchron öffnet oder synchron verschließt.

Vorzugsweise sind die Lamellen, die jeweils am Übergang von der hinteren, geodätisch höher gelegenen Kante eines Photovoltaikmoduls zum dahinter angeordneten Regensammler angeordnet sind, elektromotorisch angetrieben und von einer Schließstellung in eine Öffnungsstellung und umgekehrt elektromotorisch bewegbar.

Bevorzugt sind mehrere Photovoltaikmodule in Reihe geschaltet, insbesondere mit einer Spannung von bis zu 120 V. Eine maximale Spannung von 120 V ist vorteilhaft, da eine höhere Gleichspannung lebensgefährlich sein kann.

Vorzugsweise sind die Regensammler zwischen zwei Photovoltaikmodulen vollständig oder teilweise durch ein lichtdurchlässiges oder ein opakes Material gebildet, insbesondere durch Glas oder durch transparenten Kunststoff.

Hierdurch wird ein Lichteinfall in den Raum unter der Überdachung ermöglicht oder alternativ eine geschlossene Beschattung des Raumes unter der Überdachung ermöglicht. Besonders vorteilhaft ist eine Verwendung von transparentem Material wie beispielsweise Glas oder transparenter Kunststoff für die Regensammler, da in diesem Fall ein Lichteinfall in den Raum unter der Überdachung möglich ist, da die Photovoltaikmodule große Bereiche der Dachfläche abschatten.

Vorzugsweise weist die Überdachung zumindest einen elektrischen Verbraucher auf, wobei der Verbraucher unmittelbar von den Photovoltaikmodulen gespeist wird und/oder der von zumindest einem in die Überdachung integrierten Akkumulator gespeist wird, wobei der Akkumulator von den Photovoltaikmodulen geladen wird.

Vorzugsweise weist die Überdachung zumindest einen integrierten Wechselrichter auf, insbesondere kann ein Querträger und/oder ein Längsträger und/oder eine Stütze der Überdachung zumindest einen integrierten Wechselrichter aufweisen. Durch die Integration zumindest eines Wechselrichters kann ein unmittelbarer Anschluss an ein Gebäudeenergienetz erfolgen und/oder eine Wechselspannungssteckdose und/oder ein Wechselspannungsverbraucher unmittelbar versorgt werden.

Bevorzugt sind die Photovoltaikmodule jeweils in einem Winkel von bis zu 15° oder bis zu 20° oder bis zu 25° oder bis zu 30° oder bis zu 35° gegenüber der Horizontalen schräg ansteigend angestellt. Besonders bevorzugt sind die Photovoltaikmodule jeweils in einem Winkel von 30° bis zu 35° gegenüber der Horizontalen schräg ansteigend angestellt.

Durch eine derartige Anstellung der Photovoltaikmodule wird es gewährleistet, dass die Sonnenstrahlung möglichst senkrecht auf die Photovoltaikmodule auftrifft, wodurch das Leistungsoptimum der Photovoltaikmodule erreicht werden kann und somit der Ertrag der Photovoltaikmodule optimiert wird.

Bevorzugt bildet der Rahmen ein Rechteck oder ein Trapez, insbesondere ein Trapez, bei dem der vordere Querträger und der hintere Querträger parallel verlaufen. Es können somit mittels der Überdachung verschiedenste Geometrien und Anwendungsfälle realisiert werden, um die Überdachung den jeweiligen Anforderungen am Aufstellort anzupassen.

Bei der Überdachung kann es sich um ein Terrassendach oder ein Wintergartendach oder einen Carport handeln. Die Überdachung kann Seitenwandelemente und/oder Unterbauelemente aufweisen, wie beispielsweise schwenkbare und/oder verfahrbare Türen, insbesondere Glastüren, und/oder feststehende oder verfahrbare Wandelemente, insbesondere Glaswandelemente, und/oder Senkrechtbeschattungen und/oder Sonnenschutzelemente und/oder Sichtschutzelemente.

Bevorzugt ist an der Überdachung zumindest ein elektrisch angetriebenes Stellelement und/oder zumindest ein elektrisch angetriebenes Sonnenschutzelement angeordnet, dessen elektrischer Antrieb von einem in die Überdachung integrierten Akkumulator gespeist wird, wobei der Akkumulator von den Photovoltaikmodulen geladen wird. Durch eine solche Ausgestaltung wird der Antrieb eines elektrisch angetriebenen Stellelementes und/oder eines Sonnenschutzelementes ermöglicht, ohne dass die Überdachung zwingend an ein elektrisches Versorgungsnetz angeschlossen werden muss. Hierdurch kann der Installationsaufwand erheblich verringert werden und die Überdachung solitär aufgestellt werden. Bei dem elektrisch angetriebenen Stellelement kann es sich insbesondere um verstellbare Lamellen handeln, die wie oben erläutert, dem regendichten Verschluss oder der Öffnung der Übergänge von einem Photovoltaikmodul zu dem dahinter liegenden Regensammler dienen.

Ein Ausführungsbeispiel der Erfindung ist in den Figuren dargestellt und wird nachfolgend näher erläutert. Es zeigen:
- Fig. 1: Eine perspektivische Ansicht einer Überdachung;
- Fig. 2: eine perspektivische Ansicht eines Details der Überdachung nach Figur 1.

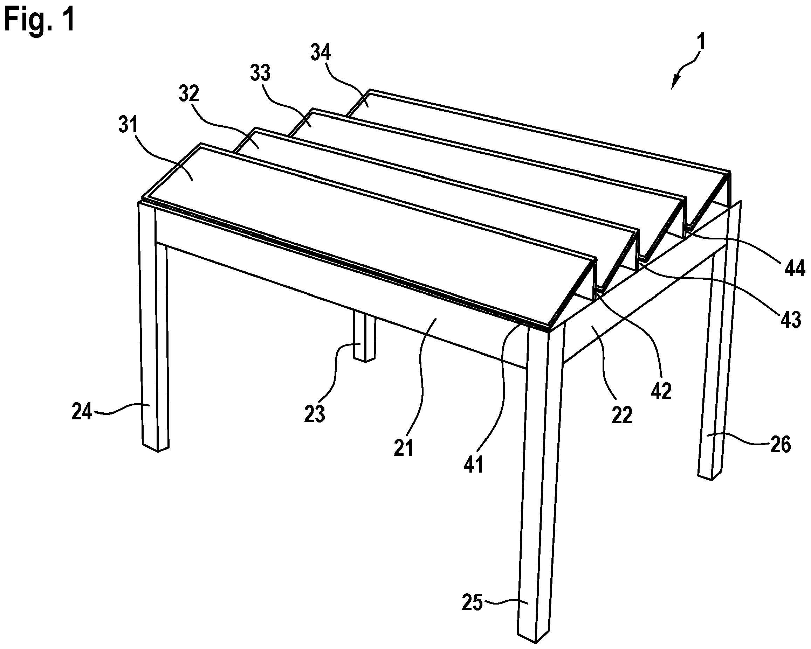

Figur 1 zeigt eine perspektivische Ansicht einer Überdachung 1. Die Überdachung 1 weist einen Rahmen aus einem vorderen Querträger 21, einem in dieser Perspektive nicht sichtbaren hinteren Querträger sowie zwei Längsträgern 22 auf. Der Rahmen der Überdachung 1 wird von senkrechten Stützpfosten 23, 24, 25, 26 getragen.

Auf dem Rahmen der Überdachung 1 sind mehrere Photovoltaikmodule 31, 32, 33, 34 vom vorderen Querträger 21 aus betrachtet entlang der seitlichen Längsträger 22 hintereinander angeordnet. Um den Ertrag der Photovoltaikmodule 31, 32, 33, 34 zu steigern und einen möglichst senkrechten Einfall des Sonnenlichtes zu ermöglichen, sind die Photovoltaikmodule 31, 32, 33, 34 nach hinten ansteigend schräg angeordnet, d.h. dass die Photovoltaikmodule 31, 32, 33, 34 gegenüber der Horizontalen unter einem Winkel angestellt sind. Auf die Photovoltaikmodule 31, 32, 33, 34 auftreffendes Regenwasser läuft somit in Richtung auf den vorderen Querträger nach vorne zu der geodätisch niedriger liegenden Kante der Photovoltaikmodule 31, 32, 33, 34.

Die geodätisch niedriger liegende vordere Kante eines jeden schräg angestellten Photovoltaikmoduls 31, 32, 33, 34 geht in einen parallel zu dieser vorderen Kante verlaufenden Regensammler 42, 43, 44 über, welcher der Sammlung und Ableitung des Regenwassers dient.

Die Regensammler 42, 43, 44 weisen ein Gefälle in Richtung auf den seitlichen Längsträger 22 auf, sodass das Regenwasser in Richtung auf den seitlichen Längsträger 22 abfließt. Der seitliche Längsträger 22 weist einen integrierten Regenwasserkanal zur Sammlung und Ableitung von Regenwasser aus den Regensammlern 42, 43, 44 zu einem in den vorderen Stützpfosten 25 integriertes Fallrohr auf.

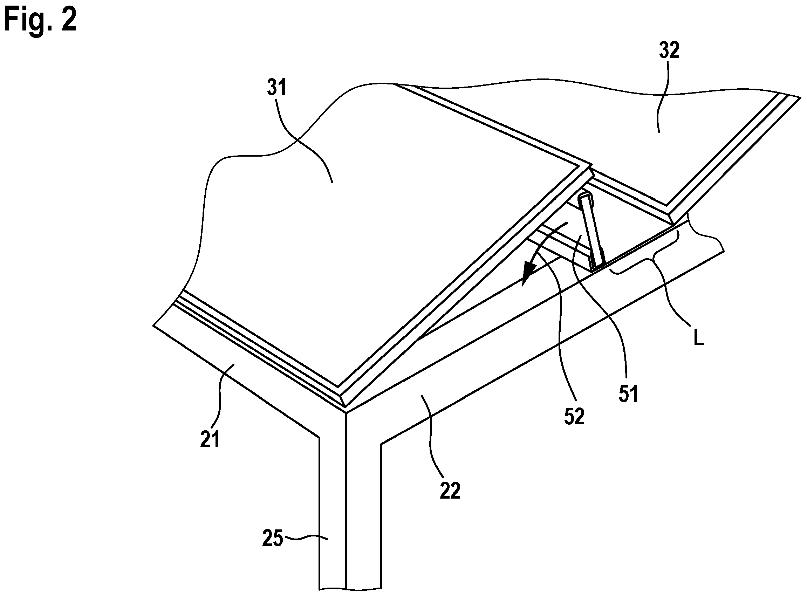

Figur 2 zeigt eine perspektivische Ansicht eines Details der Überdachung 1 mit einem Regensammler 42 zur Ableitung des von dem Photovoltaikmodul 32 ablaufenden Regenwassers. Ebenfalls erkennbar in Figur 2 ist der stufenförmige Übergang von dem vom vorderen Querträger 21 aus betrachtet vorderen Photovoltaikmodul 31 zu dem entlang des Verlaufs des seitlichen Längsträgers 22 dahinter liegenden Regensammler 42.

Um eine regendichte Überdachung 1 zu realisieren, sind an den Übergängen von der hinteren Kante eine Photovoltaikmoduls 31 zu dem nachfolgend angeordneten Regensammler vor dem nachfolgend angeordneten nächsten Photovoltaikmodul 32 Lamellen 51 angeordnet. Diese Lamelle 51 dient dem regendichten Verschluss des stufenförmigen Überganges von der hinteren, geodätisch höher gelegenen Kante eines Photovoltaikmoduls 31 zu dem vom vorderen Querträger 21 aus betrachtet dahinter liegenden Regensammler 42 auf dem geodätisch niedriger liegenden Niveau der vorderen Kante des nachfolgend angeordneten nächsten Photovoltaikmoduls 32. Da an jedem stufenförmigen Übergang eines vorderen Photovoltaikmoduls 31, 32, 33 zu dem aus der Blickrichtung vom vorderen Querträger 21 aus betrachtet anschließend angeordneten Regensammler 42, 43, 44 eine derartige Lamelle 51 angeordnet ist, wird eine insgesamt regendichte Überdachung 1 realisiert.

Die Lamellen 51 sind durch ein lichtdurchlässiges Material gebildet, um einen Lichteinfall in den Raum unter der Überdachung 1 zu ermöglichen.

Die Lamellen 51 sind jeweils mittels einer Scharnieranordnung an den Regensammlern 42, 43, 44 drehbar befestigt, sodass die Lamellen 51 von der Schließstellung gemäß Figur 2, in welcher eine regendichte Überdachung besteht, wie durch den Pfeil 52 dargestellt in eine Öffnungsstellung verlagerbar sind. Hierzu sind die Lamellen 51 um die Scharnieranordnung verdrehbar in eine Öffnungsstellung entlang des Pfeils 52 und zurück in die Schließstellung gemäß Figur 2.

Durch die Drehung der Lamellen 51 in eine Öffnungsstellung, in welcher die Lamellen 51 waagerecht liegen und den stufenförmigen Übergang von der hinteren, geodätisch höher gelegenen Kante eines Photovoltaikmoduls 31, 32, 33 zum dahinter angeordneten Regensammler 42, 43, 44 als Lüftungsöffnung freigibt, kann Stauhitze entweichen und der Raum unter der Überdachung wird belüftet. Besonders vorteilhaft ist dieser Effekt in dem Fall, dass die Überdachung mit Wandelementen zu einem Wintergarten ausgebaut ist.

Besonders vorteilhaft bei dieser Möglichkeit der Belüftung des Raums unter der Überdachung 1 durch eine Öffnung der Lamellen 51 ist der damit einhergehende Kühleffekt für die Photovoltaikmodule 31, 32, 33, 34, da die Leistung und damit der Ertrag der Photovoltaikmodule 31, 32, 33, 34 mit steigender Temperatur absinkt. Durch eine Belüftung und eine damit herbeigeführte Kühlung der Photovoltaikmodule 31, 32, 33, 34 wird somit die Leistung und der Ertrag der Photovoltaikmodule 31, 32, 33, 34 gesteigert.

Die Kontaktbereiche zwischen den Lamellen 51 und den Photovoltaikmodulen 31, 32, 33, 34 sind mit Gummidichtungen ausgerüstet, um in der Schließstellung der Lamellen eine regendichte Überdachung zu realisieren. Ebenfalls abgedichtet sind die Scharnieranordnungen, mittels derer die Lamellen 51 drehbar gelagert sind, um einen Durchtritt von Regenwasser zu unterbinden. Am Übergang von der vorderen, niedriger liegenden Kante der Photovoltaikmodule 31, 32, 33, 34 zu den Regensammlern 41, 42, 43, 44 sind ebenfalls Gummidichtungen angeordnet. Der Regensammler 41 vor dem ersten Photovoltaikmodul 31, welches am den vorderen Querträger 21 angeordnet ist, ist in den vorderen Querträger 21 integriert und leitet das Regenwasser in das Fallrohr im Stützpfosten 25 ab.

Die Lamellen 51 an den stufenförmigen Übergängen sind untereinander kinematisch mittels einer nicht dargestellten Kopplung gekoppelt und werden elektromotorisch angetrieben synchron von der Schließstellung gemäß Figur 2 in die Öffnungsstellung und umgekehrt verlagert.

Die Photovoltaikmodule 31, 32, 33, 34 sind wie in den Figuren 1 und 2 dargestellt unter einem Winkel gegenüber der Horizontalen angestellt, um einen möglichst senkrechten Lichteinfall des Sonnenlichtes zu ermöglichen, da dann die Leistung der Photovoltaikmodule 31, 32, 33, 34 maximal ist.

Die Erstreckung L der Regensammler 42, 43, 44 senkrecht zum Verlauf des vorderen Querträgers 21 ist so groß gewählt, dass ein schräg angestelltes Photovoltaikmodul 31, 32, 33, 34 bei senkrecht auf das Photovoltaikmodul auftreffendem Sonnenlicht keinen Schatten auf das vom vorderen Querträger 21 aus betrachtet dahinter angeordnete Photovoltaikmodul 32, 33, 34 wirft. Die Vermeidung eines Schattenwurfes auf die Oberfläche der Photovoltaikmodule 31, 32, 33, 34 dient ebenfalls der Steigerung der Leistung und damit des Ertrages der Photovoltaikmodule 31, 32, 33, 34.

Die Regensammler 42, 43, 44 zwischen den Photovoltaikmodulen 31, 32, 33, 34 bestehen aus transparentem Glas, um durch die streifenförmigen Regensammler 42, 43, 44 einen Lichteinfall in den Raum zu ermöglichen.

Im dargestellten Ausführungsbeispiel bildet der Rahmen der Überdachung 1 ein Rechteck. In einer nicht dargestellten Alternative bildet der Rahmen der Überdachung 1 ein Trapez, wobei der vordere Querträger 21 und der hintere Querträger parallel verlaufen. Bei der Trapezform verlaufen die Längsträger somit nicht parallel. Die Breite der Photovoltaikmodule 31, 32, 33, 34 ist dementsprechend an den Verlauf der Längsträger bei einer Trapezform angepasst und die Photovoltaikmodule 31, 32, 33, 34 sind dementsprechen unterschiedlich breit. Mit der Breite der Photovoltaikmodule 31, 32, 33, 34 ist die Erstreckung der Photovoltaikmodule 31, 32, 33, 34 parallel zum Verlauf des vorderen Querträgers 21 bezeichnet.

## Patentansprüche

1. Überdachung (1) mit einem aus zumindest einem vorderen Querträger (21) und einem hinteren Querträger und zumindest zwei Längsträgern (22) gebildeten Rahmen, wobei der Rahmen mehrere Photovoltaikmodule (31, 32, 33, 34) trägt, die sich parallel zu den Querträgern (21) erstrecken und entlang der Längsträger (22) vom vorderen Querträger (21) zum hinteren Querträger hintereinander angeordnet sind, wobei die Photovoltaikmodule (31, 32, 33, 34) gegenüber der Horizontalen unter einem Winkel schräg angestellt und jeweils im Verlauf entlang der Längsträger (22) vom vorderen Querträger (21) in Richtung auf den hinteren Querträger ansteigen, **dadurch gekennzeichnet, dass** die geodätisch niedriger liegende vordere Kante eines jeden schräg angestellten Photovoltaikmoduls (31, 32, 33, 34) in einen parallel zu dieser vorderen Kante verlaufenden Regensammler (41, 42, 43, 44) mündet.

2. Überdachung (1) nach Anspruch 1, **dadurch gekennzeichnet, dass** die Regensammler (41, 42, 43, 44) zur Ableitung von Regenwasser ein Gefälle in Richtung auf einen der Längsträger (22) oder ausgehend von der Mitte in Richtung auf beide Längsträger aufweisen.

3. Überdachung (1) nach Anspruch 1 oder2, **dadurch gekennzeichnet, dass** zumindest einer der Längsträger (22) einen integrierten Regenwasserkanal zur Sammlung und Ableitung von Regenwasser aus den Regensammlern (41. 42, 43, 44) zu einem oder mehreren Fallrohren aufweist.

4. Überdachung (1) nach einem der vorherigen Ansprüche, **dadurch gekennzeichnet, dass** die Erstreckung der Regensammler (42, 43, 44) senkrecht zum Verlauf des vorderen Querträgers (21) so groß ist, dass ein schräg angestelltes Photovoltaikmodul (31, 32, 33, 34) bei senkrecht auf das Photovoltaikmodul (31, 32, 33, 34) auftreffendem Sonnenlicht keinen Schatten auf das vom vorderen Querträger (21) aus betrachtet dahinter angeordnete Photovoltaikmodul (32, 33, 34) wirft.

5. Überdachung (1) nach einem der vorherigen Ansprüche, **dadurch gekennzeichnet, dass** der stufenförmige Übergang von der hinteren, geodätisch höher gelegenen Kante eines Photovoltaikmoduls (31, 32, 33, 34) zu dem vom vorderen Querträger aus betrachtet dahinter liegenden Regensammler (42, 43, 44) auf dem geodätisch niedriger liegenden Niveau mittels einer Lamelle (51) verschlossen ist, um eine regenwasserdichte Dachfläche zu schaffen.

6. Überdachung (1) nach Anspruch 5, **dadurch gekennzeichnet, dass** die Lamellen (51) vollständig oder teilweise durch ein lichtdurchlässiges oder ein opakes Material gebildet sind.

7. Überdachung (1) nach einem der Ansprüche 5 oder 6, **dadurch gekennzeichnet, dass** zumindest eine Lamelle (51) durch eine bewegbare Lamelle (51) gebildet ist, die von einer Schließstellung in eine Öffnungsstellung bewegbar ist.

8. Überdachung (1) nach Anspruch 7, **dadurch gekennzeichnet, dass** die Lamelle/Lamellen (51) um eine Achse drehbar gelagert ist/sind und von einer senkrechten oder annähernd senkrechten Schließstellung, in welcher der stufenförmige Übergang von der hinteren, geodätisch höher gelegenen Kante eines Photovoltaikmoduls (31, 32, 33, 34) zum dahinter angeordneten Regensammler (42, 43, 44) regendicht verschlossen ist, durch eine Drehung in eine Öffnungsstellung überführbar ist, in welcher die Lamelle/Lamellen (51) waagerecht oder annähernd waagerecht liegt/liegen und den stufenförmigen Übergang von der hinteren, geodätisch höher gelegenen Kante eines Photovoltaikmoduls (31, 32, 33, 34) zum dahinter angeordneten Regensammler (42, 43, 44) als Lüftungsöffnung freigibt.

9. Überdachung (1) nach einem der Ansprüche 7 oder 8, **dadurch gekennzeichnet, dass** mehrere Lamellen (51), die jeweils am Übergang von der hinteren, geodätisch höher gelegenen Kante eines Photovoltaikmoduls (31, 32, 33, 34) zum dahinter angeordneten Regensammler (42, 43, 44) angeordnet sind, kinematisch gekoppelt und synchron verstellbar sind.

10. Überdachung (1) nach einem der Ansprüche 7 bis 9, **dadurch gekennzeichnet, dass** die Lamellen (51), die jeweils am Übergang von der hinteren, geodätisch höher gelegenen Kante eines Photovoltaikmoduls (31, 32, 33, 34) zum dahinter angeordneten Regensammler (42, 43, 44) angeordnet sind, elektromotorisch angetrieben und von einer Schließstellung in eine Öffnungsstellung und umgekehrt elektromotorisch bewegbar sind.

11. Überdachung (1) nach einem der vorherigen Ansprüche, **dadurch gekennzeichnet, dass** die Regensammler (42, 43, 44) zwischen zwei Photovoltaikmodulen (31, 32, 33, 34) vollständig oder teilweise durch ein lichtdurchlässiges oder ein opakes Material gebildet sind.

12. Überdachung (1) nach einem der vorherigen Ansprüche, **dadurch gekennzeichnet, dass** die Überdachung (1) zumindest einen elektrischen Verbraucher aufweist, wobei der Verbraucher unmittelbar von den Photovoltaikmodulen (31, 32, 33, 34) gespeist wird und/oder der von zumindest einem in die das Überdachung integrierten Akkumulator gespeist wird, wobei der Akkumulator von den Photovoltaikmodulen (31, 32, 33, 34) geladen wird.

13. Überdachung (1) nach einem der vorherigen Ansprüche, **dadurch gekennzeichnet, dass** die Photovoltaikmodule (31, 32, 33, 34) jeweils in einem Winkel von bis zu 15° oder bis zu oder bis zu 20° oder bis zu 25° oder bis zu 30° oder bis zu 35°, insbesondere in einem Winkel von 30° bis 35°, gegenüber der Horizontalen schräg ansteigend angestellt sind.

14. Überdachung (1) nach einem der vorherigen Ansprüche, **dadurch gekennzeichnet, dass** der Rahmen ein Rechteck oder ein Trapez bildet, insbesondere ein Trapez, bei dem der vordere Querträger (21) und der hintere Querträger parallel verlaufen.

15. Überdachung (1) nach einem der vorherigen Ansprüche, **dadurch gekennzeichnet, dass** es sich bei der Überdachung (1) um ein Terrassendach oder ein Wintergartendach oder einen Carport handelt.
